# EUROPEAN PATENT APPLICATION

(11) **EP 4 782 818 A1**
(43) Date of publication of application: **29.07.2026**
(21) Application number: 26151690.0
(22) Date of filing: 13.01.2026
(51) Int. Cl.: G01N 21/33, F01D 25/00, G01N 21/55, G01N 21/94, G01N 21/954, G01N 21/85, F02C 7/30

(54) **ATMOSPHERIC POLLUTANT DETECTION AND ABATEMENT**

(30) Priority: 22.01.2025 US 202519034142
(71) Applicant: RTX Corporation, Farmington, CT 06032 (US)
(72) Inventor: LEE, Jeremiah C., Coventry (US); WARREN, Eli, Bend (US)
(74) Representative: Dehns

(57) **Abstract**

A method for detecting and removing at least one atmospheric pollutant from a surface of an aircraft engine component (108) includes detecting the at least one atmospheric pollutant on the surface of the aircraft engine component (108) using a test probe (102) and treating the at least one aircraft engine component (108) to generate a layer of at least one of a soot or other carbonaceous substance on the at least one aircraft engine component (108) to at least partially remove the at least one atmospheric pollutant from the surface of the aircraft engine component (108).

## Description

### TECHNICAL FIELD

This disclosure relates generally to pollutant detection and abatement. More specifically, this disclosure relates to a method for pollutant detection and abatement using an insertable optical probe.

### BACKGROUND

Aircraft engine components in the hot section of an aircraft engine can be subjected to damage and erosion due to its cyclic service load and due to atmospheric pollutants depositing or chemically reacting with materials such as the alloy from which the engine components are made. Atmospheric pollutants, depending on the type of pollutant, can adhere to the surface of an aircraft engine component or chemically react with material of the aircraft engine component causing degradation in its performance and integrity. Some pollutants, such as silicon dust, adhere to the surface of the aircraft engine components and even fuse onto the surface. This changes component heat transfer and flow characteristics.

Particularly vulnerable components are those containing a nickel based super alloy. Sulfur containing compounds are known to react chemically with such an alloy. There are also pollutants that when in combination with a high temperature environment can corrode the alloy or its coatings. Sea salt and sulfur containing atmospheric pollutants, for example, SO or SO2, corrode (i.e. chemically react with) the nickel alloys. The resulting metallic salt has a lower density than the metal and will generate mechanical stresses on the material causing further damages and exposing more metal to the corrosive pollutants.

Calcia-Magnesia-Alumina Silicate (CMAS) is a form of atmospheric pollutants that form molten siliceous residue which is generated at elevated temperatures within an aircraft engine. CMAS adheres to the surface of thermal barrier coatings (TBCs) and has the potential to cause significant damage to engine components resulting in TBC failures. Thus, a method for providing maintenance to detect and abate these pollutants within the aircraft engine would be greatly beneficial.

### SUMMARY

This disclosure relates to detection and abatement of atmospheric pollutants within an aircraft engine.

In some examples, a method for detecting and removing at least one atmospheric pollutant from a surface of an aircraft engine component includes detecting the at least one atmospheric pollutant on the surface of the aircraft engine component using a test probe and treating the aircraft engine component to generate a layer of at least one of a soot or other carbonaceous substance on the aircraft engine component to at least partially remove the at least one atmospheric pollutant from the surface of the aircraft engine component.

Any single one or any combination of the following features may be used with the examples above. The method where the step of detecting further may include installing the test probe for detecting the at least one atmospheric pollutant on the surface of the aircraft engine component transmitting a light signal from the test probe to reflect from the aircraft engine component, receiving a reflected light signal from the surface of the aircraft engine component at the test probe and determining if the reflected light signal indicates a presence of the at least one atmospheric pollutant on the surface of the aircraft engine component. The step of determining further may include determining an absence of a specific wavelength of light in the reflected light signal indicating the presence of the at least one atmospheric pollutant, where the specific wavelength is associated with at least one of a specific pollutant or compounds containing a specific pollutant. The step of determining the absence of the wavelength of light further may include determining the absence of an approximately 265 nm wavelength of the light in the reflected light signal to detect sulfate compounds. The step of treating further may include depositing a layer of unburned, excess fuel on the surface of the aircraft engine component. The method may include applying an activation energy to the layer of unburned, excess fuel to chemically reduce an amount of sulfates on the surface of the aircraft engine component. Applying the activation energy further may include applying a laser light signal from a laser implemented within the test probe. Applying the activation energy further may include applying the activation energy from a combustor of an aircraft engine. The aircraft engine component may include a turbine blade.

In other examples, a system for detecting and removing at least one atmospheric pollutant from a surface of an aircraft engine component includes a test probe configured to detect the at least one atmospheric pollutant on the surface of the aircraft engine component and where the test probe is further configured to generate a signal indicating a presence of the at least one atmospheric pollutant responsive to detection of the at least one atmospheric pollutant.

Any single one or any combination of the following features may be used with the examples above. The system where the test probe further may include a light source configured to transmit a light signal from the test probe to reflect from the surface of the aircraft engine component and a detector configured to receive a reflected light signal from the surface of the aircraft engine component, where the detector is further configured to determine if the reflected light signal indicates a presence of the at least one atmospheric pollutant on the surface of the aircraft engine component. The system may include a laser configured to provide a laser beam for energizing a layer of fuel deposited on the aircraft engine component. The test probe is further configured to be installed in a borescope port of an aircraft engine. The test probe further may include a light source configured to transmit a light signal from the test probe to reflect from the surface of the aircraft engine component, a detector configured to receive a reflected light signal from the surface of the aircraft engine component and a processor configured to analyze the reflected light signal and determine if the reflected light signal indicates a presence of the at least one atmospheric pollutant on the surface of the aircraft engine component. The processor is further configured to determine an absence of a specific wavelength of light in the reflected light signal indicating the presence of the at least one atmospheric pollutant, where the specific wavelength is associated with a specific pollutant.

In still other examples, a method for detecting and removing or reducing at least one atmospheric pollutant from a surface of an aircraft engine component includes installing a test probe for detecting the at least one atmospheric pollutant on the surface of the aircraft engine component, transmitting a light signal from the test probe to reflect off of the aircraft engine component, receiving a reflected light signal from the surface of the aircraft engine component at the test probe and determining if the reflected light signal indicates a presence of the at least one atmospheric pollutant on the surface of the aircraft engine component, depositing a layer of unburned, excess fuel on the surface of the aircraft engine component if the at least one atmospheric pollutant is on the surface and applying an activation energy to the layer of unburned, excess fuel or a carbonaceous substance generated by excess fuel to chemically reduce at least one of an amount of atmospheric pollutants or compounds containing atmospheric pollutants on the surface of the aircraft engine component.

Any single one or any combination of the following features may be used with the examples above. The method where the step of determining further may include determining an absence of a specific wavelength of light in the reflected light signal indicating the presence of the at least one atmospheric pollutant, where the specific wavelength is associated with at least one of a specific pollutant or compounds containing atmospheric pollutants. The step of determining the absence of the wavelength of light further may include determining the absence of an approximately 265 nm wavelength of the light in the reflected light signal for the detection of sulfates. Applying the activation energy further may include applying a laser light signal from a laser implemented within the test probe. Applying the activation energy further may include applying the activation energy from a combustor of an aircraft engine.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates a block diagram of a system for inserting a test probe to periodically scan aircraft engine components;
FIGURE 2 illustrates a block diagram of one embodiment of a test probe; and
FIGURE 3 illustrates a flow diagram of the process for testing for and removing atmospheric pollutants on aircraft engine components using the test probe.

### DETAILED DESCRIPTION

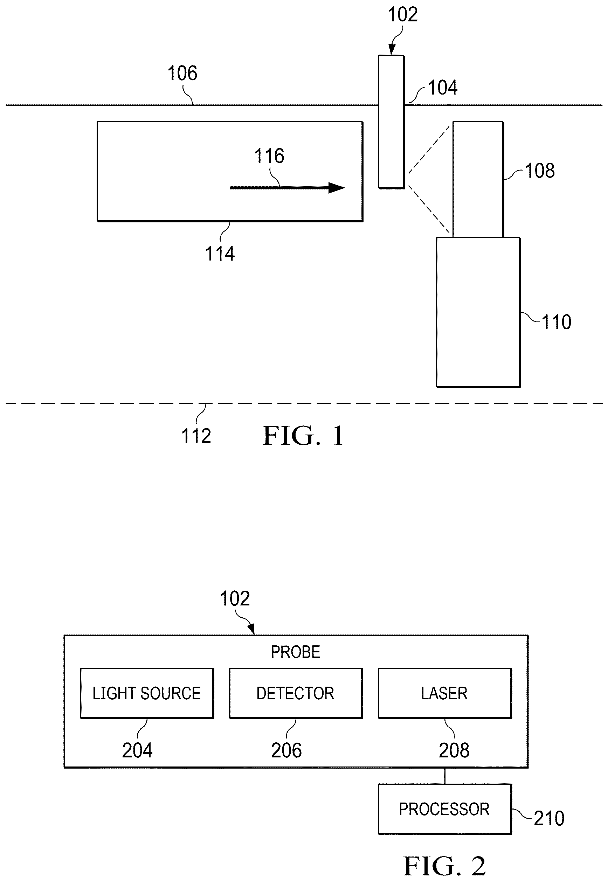

FIGURES 1 through 3, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIGURE 1 illustrates a block diagram of a method for inserting a test probe 102 to periodically scan aircraft engine components. The test probe 102 is inserted into a borescope port 104 defined within the aircraft engine case 106 of an aircraft engine in a periodic fashion in order to detect pollutants that have deposited upon aircraft engine components such as the turbine blades 108 mounted on the turbine hub 110. The turbine blades 108 rotate about an axis of rotation 112 of the turbine. The test probe 102 will be pointed towards the turbine blades 108 or can be swept to look at other static components of the aircraft engine. The test probe 102 may also comprise a custom-made test probe such as a specific lens or lens-image-sensor or articulation on the imaging head configured to monitor specific aircraft engine hardware. While the present description is made with respect to the detection of atmospheric pollutants upon the turbine blades 108, it will be appreciated that the techniques described herein may be applied to any components of the aircraft system which may have damaging pollutants deposited thereon such as the combustor 114 surfaces. These aircraft engine components may be accessed for testing by placing the test probe 102 in other borescope ports 104 or other available access points.

The inserted test probe 102 is located near the combustor 114 that is located upstream of the turbine blades 108. Coating of the turbine blade 108 and the combustor 114 surfaces with a soot/carbon layer provides protection of the turbine blade 108 from the atmospheric pollutants and abatement of atmospheric pollutants on the turbine blade 108 or on the surfaces of the combustor 114. The soot/carbonaceous layer consists of soot and cyclic and straight chain hydrocarbons (not purely carbon). The soot/carbon layer is provided by a flow of unburned fuel is indicated generally at 116 being provided to coat the turbine blade 108 or other engine components. When extra unburned fuel 116 is provided from the combustor 114, soot particles and sticky carbonaceous layer are formed on the surface of the turbine blades 108. In practice, the combustor 114 design and control are configured to reduce such formation. However, during transients, some higher amounts of soot or fuel droplets may be formed on the surface of the turbine blades 108. These particles and droplets deposit onto the surface of the turbine blade 108 or other engine components. When heated or otherwise activated, these form a sticky carbonaceous layer on the surfaces.

In the hot sections of the aircraft engine, such deposits comprise a very thin layer having thickness ranges from a few micrometers to hundreds of micrometers and are not a problem to the aircraft engine components. During normal operation, the soot/carbon layer is burned off. The thin layer of soot/carbonaceous deposit protects the surface of the aircraft component, such as the turbine blade 108 from degradation by atmospheric pollutants. The soot layer can serve as a barrier for keeping atmospheric pollutants from sticking onto or chemically reacting with the surfaces of the aircraft engine components. In some types of atmospheric pollutants, the carbonaceous soot layers prevent the chemical reactions between the atmospheric pollutants and the surface of the aircraft engine components. A soot deposit layer prohibits these atmospheric pollutant chemicals from contacting the alloy on the surface of the aircraft engine and thus reducing the rate of fusing onto the surfaces of the aircraft engine components or eroding of the surfaces chemically of the aircraft engine components. Additionally, carbon, the main constituent of soot, is a strong reducing agent that will react with these oxidizing chemicals and reduce their potency in attacking the alloys. Carbon can also reverse these erosions by chemically removing the anion of the metal salt (results of the chemical reaction between the atmospheric pollutants and the alloy.

Referring now to FIGURE 2, there is illustrated a block diagram of the test probe 102. The test probe 102 includes a light source 204, a detector 206 and a laser 208. The light source 204 is used for providing a light beam that will reflect from the surface of the aircraft engine component that is being monitored. The reflected light from the aircraft engine component is detected by a detector 206. The reflected light is then provided back to a processor 210 that analyzes the reflected light. Alternatively, the analysis may be performed by circuitry within the detector 206 or outside the detector 206.

The processor 210 determines whether certain wavelengths of light associated with particular atmospheric pollutants are absent from the reflected light. The absence of the wavelength from the reflected light indicates that the atmospheric pollutant or its erosion chemical product on the surface of the aircraft engine component has absorbed the wavelength associated with the absent wavelength. This enables the determination of the presence of atmospheric pollutants on the surface of the aircraft engine component. The laser 208 is an optional component that may be included within the test probe 102 in order to initiate an initiation of pyrolysis of the fuel layer that has been deposited upon the surface of the aircraft engine component. The pyrolysis of the fuel layer by the laser causes creation of the soot or sticky carbonaceous layer that protects the surface of the aircraft engine component from degradation caused by the atmospheric pollutants. In alternative embodiments, the laser 208 could be replaced with other components capable of energizing the layer of unburned fuel that is coating the surface of the aircraft engine component.

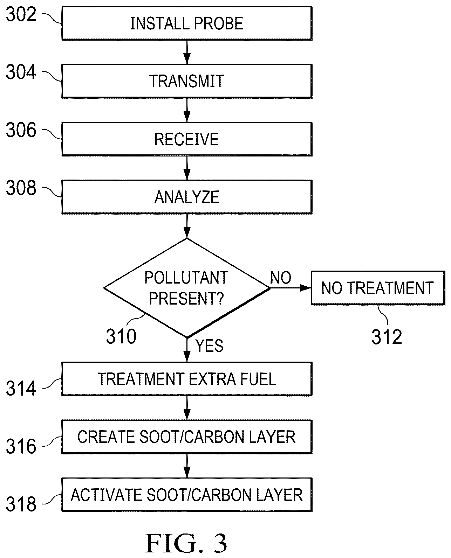

Referring now to FIGURE 3, there is illustrated a flow diagram of the process for detecting atmospheric pollutants and then abating or removing them from the surface of the aircraft engine components. Initially, the test probe 102 is installed at step 302 within a borescope port 104 in the aircraft engine case 106. The test probe 102 is temporarily installed in the borescope port 104 and has two channels to the processor 210. One channel controls transmission of a broad or discreet spectrum light signal to reflect off the surface of the aircraft engine component using the light source 204. The second channel controls the detector 206 which can detect and determine if there are any sulfates or sulfur containing compounds or other pollutants on the surface of the aircraft engine component to which the light source signal was directed. The light source 204 transmits at step 304 the broad or discreet spectrum signal toward the surface of the aircraft engine component. The transmitted signal reflects from the surface of the aircraft engine component and is received at step 306 at the detector 206. The detector 206 or associated processor 210 analyzes the received reflected signal at step 308 to determine if there are any sulfates or other pollutants present on the aircraft engine component surface. Inquiry step 310 determines if the reflected light includes wavelengths in a particular range that would provide an indication of the presence of the sulfates or other pollutants. For example, if the reflected light beam did not include an approximately 265 nm wavelength, sulfates are likely present indicating that the surface of the engine parts could be attacked by atmospheric sulfur containing pollutants. Different wavelength light can be tuned to detect other types of pollutants, such as different components in CMAS. If inquiry step 310 determines that there are no pollutants present, then no treatment of the surface of the aircraft engine component is necessary at step 312. If inquiry step 310 determines that pollutants are present, the aircraft system component treatment is initiated at step 314 that injects extra fuel through the combustor 114 to cause an incomplete combustion process. The incomplete combustion process causes carbonaceous materials to be deposited on the surface of the aircraft engine system component such as the turbine blade 108 at step 316. Finally, at step 318, an activation energy is applied to the soot/carbon layer in order to abate or remove the undesired atmospheric pollutants.

If sulfates have been determined to exist upon the surface of the aircraft engine components, the application of the activation energy will enable a chemical reduction of the sulfates or other pollutants that are in the presence of the carbon within the soot/carbon layer. Removal of the sulfates in this fashion will prevent direct damage to the uncoated metal or indirect damage to the TBC. The activation energy may be provided by subsequent combustion from the combustor 114 or alternatively, may be provided by a laser 208 incorporated within that the test probe 102. Thus, the abatement process can occur during motoring of the starter of the aircraft engine to enable viewing of each turbine blade 108 of the turbine stage.

The method of FIGURE 3, may be utilized in two different configurations. The method may be used as a preventative or scheduled maintenance process wherein fuel may be deployed during motoring when there will be weak, low power combustion within the combustor 114 to enable carbon deposits on the surfaces of the aircraft engine components. Heat from combustion would provide the activation energy for the pyrolysis of the deposited fuel. Alternatively, in condition based maintenance (CBM), the test probe 102 may be used to detect the presence of a sulfate or other pollutant. Upon the detection of a sulfate or other pollutant, fuel is applied to coat the aircraft engine components as described previously. The activation energy in the applied by a light, laser or other component within the test probe 102 or from engine combustion. If a light within the test probe 102 is utilized there may be an opportunity to recheck for the presence of atmospheric pollutants prior to continued service.

The above-described system and method allows for condition based maintenance instead of scheduled maintenance and/or part replacement. Even without the detection of sulfates on the aircraft engine components, the periodic use of the treatment may significantly extend the life of aircraft engine components against erosion and deposition of various types of pollutants. This will provide for decrease cost and increased reliability/safety of the aircraft system components.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component" , "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method for detecting and removing at least one atmospheric pollutant from a surface of an aircraft engine component, comprising:
detecting the at least one atmospheric pollutant on the surface of the aircraft engine component using a test probe; and
treating the aircraft engine component to generate a layer of at least one of a soot or other carbonaceous substance on the aircraft engine component to at least partially remove the at least one atmospheric pollutant from the surface of the aircraft engine component.

2. The method of Claim 1, wherein the step of detecting further comprises:
installing the test probe for detecting the at least one atmospheric pollutant on the surface of the aircraft engine component;
transmitting a light signal from the test probe to reflect from the aircraft engine component;
receiving a reflected light signal from the surface of the aircraft engine component at the test probe; and
determining if the reflected light signal indicates a presence of the at least one atmospheric pollutant on the surface of the aircraft engine component.

3. The method of Claim 2, wherein the step of determining further comprises determining an absence of a specific wavelength of light in the reflected light signal indicating the presence of the at least one atmospheric pollutant, wherein the specific wavelength is associated with at least one of a specific pollutant or compounds containing a specific pollutant.

4. The method of Claim 3, wherein the step of determining the absence of the wavelength of light further comprises determining the absence of an approximately 265 nm wavelength of the light in the reflected light signal to detect sulfate compounds.

5. The method of any of Claims 1 to 4, wherein the step of treating further comprises depositing a layer of unburned, excess fuel on the surface of the aircraft engine component.

6. The method of Claim 5 further comprising applying an activation energy to the layer of unburned, excess fuel to chemically reduce an amount of sulfates on the surface of the aircraft engine component.

7. The method of Claim 6, wherein applying the activation energy further comprises applying a laser light signal from a laser implemented within the test probe; and/or
wherein applying the activation energy further comprises applying the activation energy from a combustor of an aircraft engine.

8. The method of any of Claims 1 to 7, wherein the aircraft engine component comprises a turbine blade.

9. A system for detecting and removing at least one atmospheric pollutant from a surface of an aircraft engine component, comprising:
a test probe configured to detect the at least one atmospheric pollutant on the surface of the aircraft engine component; and
wherein the test probe is further configured to generate a signal indicating a presence of the at least one atmospheric pollutant responsive to detection of the at least one atmospheric pollutant.

10. The system of Claim 9, wherein the test probe further comprises:
a light source configured to transmit a light signal from the test probe to reflect from the surface of the aircraft engine component; and
a detector configured to receive a reflected light signal from the surface of the aircraft engine component, wherein the detector is further configured to determine if the reflected light signal indicates a presence of the at least one atmospheric pollutant on the surface of the aircraft engine component;
optionally comprising a laser configured to provide a laser beam for energizing a layer of fuel deposited on the aircraft engine component.

11. The system of Claim 9 or 10, wherein the test probe is further configured to be installed in a borescope port of an aircraft engine.

12. The system of Claim 9, wherein the test probe further comprises:
a light source configured to transmit a light signal from the test probe to reflect from the surface of the aircraft engine component;
a detector configured to receive a reflected light signal from the surface of the aircraft engine component; and
a processor configured to analyze the reflected light signal and determine if the reflected light signal indicates a presence of the at least one atmospheric pollutant on the surface of the aircraft engine component.

13. The system of Claim 12, wherein the processor is further configured to determine an absence of a specific wavelength of light in the reflected light signal indicating the presence of the at least one atmospheric pollutant, wherein the specific wavelength is associated with a specific pollutant.

14. A method for detecting and removing or reducing at least one atmospheric pollutant from a surface of an aircraft engine component, comprising:
installing a test probe for detecting the at least one atmospheric pollutant on the surface of the aircraft engine component;
transmitting a light signal from the test probe to reflect off of the aircraft engine component;
receiving a reflected light signal from the surface of the aircraft engine component at the test probe; and
determining if the reflected light signal indicates a presence of the at least one atmospheric pollutant on the surface of the aircraft engine component;
depositing a layer of unburned, excess fuel or a carbonaceous substance generated by excess fuel on the surface of the aircraft engine component if the at least one atmospheric pollutant is on the surface; and
applying an activation energy to the layer of unburned, excess fuel or a carbonaceous substance generated by excess fuel to chemically reduce the at least one atmospheric pollutant on the surface of the aircraft engine component.

15. The method of Claim 14, wherein the step of determining further comprises determining an absence of a specific wavelength of light in the reflected light signal indicating the presence of the at least one atmospheric pollutant, wherein the specific wavelength is associated with at least one of a specific pollutant or compounds containing atmospheric pollutants, wherein optionally:
the step of determining the absence of the wavelength of light further comprises determining the absence of an approximately 265 nm wavelength of the light in the reflected light signal for the detection of sulfates; and/or
wherein applying the activation energy further comprises applying a laser light signal from a laser implemented within the test probe; and/or
wherein applying the activation energy further comprises applying the activation energy from a combustor of an aircraft engine.
